# EUROPÄISCHE PATENTSCHRIFT

(11) **EP 2 656 735 B1**
(45) Veröffentlichungstag und Bekanntmachung des Hinweises auf die Patenterteilung: **19.12.2018**
(21) Anmeldenummer: 12165318.2
(22) Anmeldetag: 24.04.2012
(51) Int. Cl.: A21D 13/40, A21D 13/22, A21D 13/32, F26B 15/08, F26B 25/00, F26B 25/06, F26B 5/04

(54) **Teilbare Backware**
Separable baked good
Produit de boulangerie divisible

(43) Veröffentlichungstag der Anmeldung: 30.10.2013
(73) Patentinhaber: MEGGLE Aktiengesellschaft, 83512 Wasserburg (DE)
(72) Erfinder: Meister, Ingo, 38723 Seesen (DE); Salzer, Frank, 83533 Edling (DE)
(74) Vertreter: Weickmann & Weickmann PartmbB

(56) Entgegenhaltungen:
- EP-A2- 0 841 009
- DE-A1- 19 922 988
- US-A- 3 880 030
- US-A- 3 936 255
- US-A- 4 276 800
- US-A1- 2004 086 601
- US-B1- 6 562 389

## Beschreibung

Die vorliegende Erfindung betrifft eine Backware, die durch Einkerbungen in mehrere Segmente unterteilt ist, sowie ein Verfahren zu deren Herstellung.

Lebensmittel, die weitgehend vorgefertigt sind und zu Hause schnell und einfach zubereitet werden können, erfreuen sich bei Verbrauchern großer Beliebtheit. So sind auch vorgebackene, verpackte Backwaren inzwischen in den unterschiedlichsten Geschmacksrichtungen und Formen erhältlich. Auch Backwaren mit verschiedenen süßen oder pikanten Füllungen sind weit verbreitet. Durch kurzes Aufbacken im Ofen, auf dem Grill oder auch im Toaster erhält der Verbraucher aus den vorgebackenen Backwaren ein verzehrfertiges Produkt.

Beispielsweise beschreibt US 2004/086601 A1 einen verwendungsfertigen gekühlten oder gefrorenen Teig in Form einer Platte oder eines Blocks, der trennbare Portionen vordefinierter Form aufweist. Das US-Patent US 6,562,389 B1 beschreibt eine weitere Backware, die durch Einkerbungen in mehrere Segmente unterteilt ist, ähnlich wie dies auch EP 0 841 009 A2 offenbart. US Patent 3,880,030 beschreibt eine Vorrichtung zum Herstellen von Backwaren, welche Einkerbungen aufweisen, so dass sie leicht in einzelne Teile getrennt werden können.

Üblicherweise sind vorgebackene Backwaren im Handel als kleinstückige Gebäckstücke oder in Form eines größeren Brotlaibs, beispielsweise in Baguette-Form erhältlich. Solche Baguettes werden häufig auch als gefüllte Kräuterbaguettes angeboten, wobei das vorgebackene Produkt an seiner Oberfläche Einschnitte aufweist, in die eine Füllung aus Kräuterbutter eingebracht ist. Wenn ein solches Kräuterbaguette für den Verzehr aufgebacken wird, besteht die Gefahr, dass die Füllung über die Schnittfläche austritt und in den Backofen oder auf den Grill tropft. Die Portionierung eines solchen eingeschnittenen Kräuterbaguettes ist durch die Einschnitte zwar deutlich erleichtert, da jedoch die Füllung an den Schnittflächen freiliegt, bedeutet dies in der Regel, dass sich der Verbraucher beim Portionieren die Finger durch Berühren der Füllung verschmutzt.

Aufgabe der vorliegenden Erfindung war es daher, zumindest teilweise vorgebackene Backwaren bereitzustellen, die besonders einfach zu portionieren sind. Zudem sollten solche Backwaren auch in gefüllter Form angeboten werden können, ohne dass die oben geschilderten Probleme des Standes der Technik auftreten.

Erfindungsgemäß wird diese Aufgabe gelöst durch eine Backware, welche zumindest teilweise gebackenes Brot umfasst, dadurch gekennzeichnet, dass die Backware an zwei oder mehreren Positionen ihrer Längsrichtung Einkerbungen über ihre gesamte Breite aufweist, welche die Backware in Segmente unterteilen, wobei sich die von außen erkennbaren Einkerbungen im Inneren der Backware als Unterbrechung der Teigstruktur fortsetzen, die nicht bis zur Unterseite der Backware reicht, und wobei die einzelnen Segmente der teilweise gebackenen Backware im Bereich einer gedachten Verlängerung der Einkerbungen im Inneren der Backware durch eine Bestreuung getrennt und im Wesentlichen nicht untereinander verbacken sind, und die Backware durch das im Folgenden beschriebene Verfahren erhältlich ist.

Die Form der erfindungsgemäßen Backware ist grundsätzlich nicht beschränkt. Es sind Backwaren mit runder, ovaler, rechteckiger oder quadratischer Grundfläche denkbar. Brotfladen, Brotlaibe, Brotstangen, wie Baguettebrote sind ebenfalls mitumfasst.

Der Begriff "Längsrichtung" oder "Länge" bezieht sich erfindungsgemäß auf eine beliebige Ausdehnung der Backware, vorzugsweise auf die längste Ausdehnung der Backware. Bei einer Backware mit weitgehend runder oder quadratischer Grundfläche bezieht sich der Begriff "Längsrichtung" oder "Länge" auf einen Durchmesser oder eine beliebige Seitenkante der Backware.

Als "Breite" der Backware ist die senkrecht zur Längsrichtung verlaufende Ausdehnung der Backware zu verstehen.

Die Einkerbungen in der erfindungsgemäßen Backware verlaufen quer zur Längsrichtung und erstrecken sich über die gesamte Breite der Backware. Dabei müssen die Einkerbungen nicht notwendigerweise senkrecht zur Längsrichtung verlaufen, sondern können, bezogen auf die Längsrichtung, auch um einen beliebigen anderen Winkel abgewinkelt sein. Vorzugsweise verlaufen die verschiedenen Einkerbungen im Wesentlichen parallel zueinander. Die Einkerbungen sind vorzugsweise gleichmäßig über die gesamte Längsrichtung der Backware verteilt, mit im Wesentlichen gleichen Abständen zwischen den einzelnen Einkerbungen.

Ein weiterer Gegenstand der Erfindung ist ein Verfahren zur Herstellung einer Backware, welche zumindest teilweise gebackenes Brot umfasst, umfassend die Schritte
(i) Bereitstellen eines Teiglings,
(ii) Aufbringen einer Bestreuung auf der Oberseite des Teiglings,
(iii) Ausbilden von Einkerbungen über die gesamte Breite des Teiglings an zwei oder mehreren Positionen seiner Längsrichtung, um den Teigling in mehrere Segmente zu unterteilen, und
(iv) zumindest teilweises Backen des Teiglings,
wobei der Teigling dabei nach Schritt (i) oder (ii) oder während Schritt (iii) zu einem Teigling mit einer vorbestimmten Form portioniert werden kann und wobei die Tiefe der Einkerbungen zumindest 80%, vorzugsweise zumindest 90%, vorzugsweise zumindest 95%, weiter bevorzugt zumindest 98% der Dicke des Teiglings beträgt,
und die Einkerbungen in Schritt (iii) durch Eindrücken des Teiglings bis auf eine Restdicke von nicht mehr als 5 mm, vorzugsweise nicht mehr als 3 mm, weiter bevorzugt nicht mehr als 2 mm ausgebildet werden können.

Durch die Einkerbungen, die im Rohzustand des Teiglings ausgebildet werden, wird der Teigling in mehrere Segmente unterteilt. Beim anschließenden Backen des Teiglings schließen sich die Einkerbungen teilweise wieder, da der Teigling beim Backen aufgeht. Der Teigling verbackt im Bereich der ursprünglichen Einkerbungen jedoch nicht vollständig, so dass in der (vor)gebackenen Backware die ursprünglichen Einkerbungen im Inneren noch als Unterbrechung der Teigstruktur erkennbar sind.

Wenn die Einkerbungen im Teigling besonders tief ausgebildet wurden, so ist in der (vor)gebackenen Backware auch von der Unterseite eine kleine Einkerbung erkennbar, die auf das Aufgehverhalten des Teiglings zurückzuführen ist. Die ursprünglich in Schritt (iii) ausgebildeten Einkerbungen reichen jedoch nicht vollständig bis zur Unterseite des Teiglings.

Die Tiefe der Einkerbungen im Teigling beträgt zumindest 80%, vorzugsweise zumindest 90%, vorzugsweise zumindest 95%, weiter bevorzugt zumindest 98% der Dicke des Teiglings. In der (vor)gebackenen Backware ist von der ursprünglichen Einkerbung im Teigling nur noch eine kleinere Einkerbung von der Oberseite erkennbar, die sich in der Verlängerung ins Innere der Backware als Unterbrechung der Teigstruktur fortsetzt.

Die Einkerbungen werden in Schritt (iii) durch Eindrücken des Teiglings ausgebildet. Dies bedeutet, dass im Gegensatz zu einem Einschneiden des Teiglings kein Aufbrechen der inneren Teigstruktur erfolgt, sondern die glatte Teigoberfläche in die Einkerbungen gezogen wird. Vorzugsweise wird der Teigling bis auf eine Restdicke von nicht mehr als 5 mm, vorzugsweise nicht mehr als 3 mm und weiter bevorzugt nicht mehr als 2 mm eingedrückt. Im Bereich der Restdicke des Teiglings bleibt dieser am Stück; hier wird die Teigstruktur nicht unterbrochen.

An den Stellen der Einkerbungen lässt sich die (vor)gebackene Backware später besonders leicht in die einzelnen Segmente zerteilen. Durch das zumindest teilweise Backen dehnt sich der Teigling zwar aus, es erfolgt jedoch kein vollständiges Verbacken der durch die ursprünglichen Einkerbungen getrennten Segmente.

In einer besonders bevorzugten Ausführungsform des erfindungsgemäßen Verfahrens werden die Einkerbungen in Schritt (iii) mittels einer Schneide/Prägevorrichtung in dem Teigling ausgebildet, wobei der Teigling gleichzeitig zu einem Teigling mit einer vorbestimmten Form portioniert wird, der durch die Einkerbungen in mehrere Segmente unterteilt ist. Eine besonders geeignete Schneide/Prägevorrichtung ist nachstehend beschrieben.

Beispielsweise kann der Teigling in Schritt (i) in Form eines längeren Teigstrangs bereitgestellt werden, von dem in Schritt (iii) ein vorzugsweise länglicher Teigling abgeschnitten wird. Gleichzeitig erfolgt dabei das Einprägen von Einkerbungen in den Teigling.

Um die Zerteilung in einzelne Segmente weiter zu unterstützen, kann eine Bestreuung aufgebracht werden. Wenn die Bestreuung auf der Oberseite eines Teiglings aufgebracht wird, so wird sie beim anschließenden Ausbilden von Einkerbungen durch Eindrücken des Teiglings mit in die Einkerbungen gezogen. Beim anschließenden (Vor)backen des Teiglings verhindert die eingebrachte Bestreuung ein vollständiges Zusammenwachsen der durch die Einkerbungen getrennten Teigsegmente. Abhängig davon, welche Art der Bestreuung verwendet wird, kann diese in der resultierenden (vor)gebackenen Backware im Bereich einer gedachten Verlängerung der verbliebenen von außen erkennbaren Einkerbungen im Inneren der Backware nachweisbar sein.

Für die Bestreuung können gemäß der vorliegenden Erfindung unter anderem Mehl, Mehlerzeugnisse, Körner, Kerne, Kartoffeln, Nüsse, Kräuter, Gewürze, Röstzwiebeln sowie Zubereitungen und/oder Mischungen davon verwendet werden. Während Mehl und Mehlerzeugnisse beim Backen in der Regel vom Teig aufgenommen werden, sind die übrigen Arten von Bestreuungen auf der Oberfläche der (vor)gebackenen Backware und vorzugsweise auch im Bereich einer gedachten Verlängerung der Einkerbungen im Inneren der Backware noch erkennbar. Unter dem Begriff "Zubereitungen" werden erfindungsgemäß insbesondere Mahlprodukte, Röstprodukte, Lösungen, Suspensionen, Extrudate wie z.B. Cornflakes und Ähnliches verstanden. Mischungen ein oder mehrerer der genannten Bestreuungen sind ebenfalls möglich.

Um zu gewährleisten, dass die Bestreuung in der (vor)gebackenen Backware noch erkennbar ist und dass die Bestreuung die Zerteilung der Segmente unterstützt, wird vorzugsweise eine Bestreuung mit Partikeln von einer Teilchengröße von mindestens 0.3 mm verwendet. Vorzugsweise umfasst die Bestreuung Partikel mit einer Teilchengröße von mindestens 0.5 mm, weiter bevorzugt mindestens 0.8 mm.

Ein Bestandteil der erfindungsgemäßen Backware ist zumindest teilweise vorgebackenes Brot. Der Begriff "Brot" bezeichnet erfindungsgemäß eine Zubereitung auf Grundlage eines Teigs, der gemahlenes Getreide, Wasser und Triebmittel umfasst. Der Brotteig kann unter anderem Weizen, Dinkel und/oder Roggenmehl enthalten, jeweils mit beliebigem Ausmahlungsgrad. Das Brot kann in teilweise oder vollständig gebackenem Zustand vorliegen. In einer bevorzugten Ausführungsform wird die Backware in einer Form bereitgestellt, in der das Brot soweit vorgebacken ist, dass ein Konsument die Backware nur für wenige Minuten nachbacken muss, um ein verzehrfertiges Produkt zu erhalten. In einer anderen Ausführungsform der erfindungsgemäßen Backware ist das Brot bereits vollständig gebacken und kann je nach Belieben erwärmt werden.

In einer besonders bevorzugten Ausführungsform werden in den Brotteig ein oder mehrere Geschmackszutaten miteingebacken. Geeignete Geschmackszutaten sind beispielsweise Kräuter, Gewürze, Gemüse, Pilze, Obst, Trockenfrüchte, Hülsenfrüchte, Körner, Kerne, Fleisch, Fisch, Meeresfrüchte etc.

Als Gemüse können rohe, gekochte, gebratene, eingelegte oder getrocknete Gemüse, wie Auberginen, Brokkoli, Chilischoten, Karotten, Paprikaschoten, Spinat, Tomaten Zucchini etc. verwendet werden.

Als Körner und Kerne sind unter anderem Koriander, Kürbiskerne, Kümmel, Mandel, Mohn, Nüsse, Sesam, Sonnenblumenkerne und Pinienkerne geeignet, die entweder ganz oder zerkleinert verwendet werden können.

Erfindungsgemäße Fleischzutaten können insbesondere Schinken, Speck und Wurst sein.

In einer besonders bevorzugten Ausführungsform wird die erfindungsgemäße Backware weiterhin mit einer Füllung versehen. Diese ist bevorzugt mittig in den einzelnen Segmenten der Backware enthalten.

In einer besonders bevorzugten Ausführungsform umfasst das Herstellungsverfahren daher weiterhin den Schritt (v) Einbringen einer Füllung in die einzelnen Segmente der Backware. Vorzugsweise wird die Füllung mittig in die einzelnen Segmente der (vor)gebackenen Backware eingespritzt.

In einer bevorzugten Ausführungsform umfasst die Füllung ein oder mehrere Speisefette, gegebenenfalls in Kombination mit einer Würzmischung. Eine erfindungsgemäße Würzmischung kann, je nach gewünschter Geschmacksrichtung der Backware beliebige Kräuter und Gewürze umfassen. Beispielsweise können Kräuter und Gewürze, wie Bärlauch, Basilikum, Beifuß, Bohnenkraut, Borretsch, Brunnenkresse, Chili, Dill, Estragon, Kerbel, Knoblauch, Kresse, Liebstöckel, Majoran, Melisse, Minze, Oregano, Paprika, Petersilie, Pfeffer, Pimpinelle, Rosmarin, Salbei, Salz Sauerampfer, Schittlauch, Thymian, Ysop und/oder Zwiebeln einzeln oder in beliebigen Kombinationen enthalten sein. Kräuter können beispielsweise in gehackter, kleingeschnittener Form, als Extrakt, in frischer, gefrorener Form oder in getrockneter oder wärmebehandelter Form enthalten sein. Darüberhinaus können je nach gewünschter Geschmacksrichtung in der Füllung auch weitere Bestandteile, wie etwa Oliven, Tomaten, Pepperoni, etc. enthalten sein.

Die Menge der Würzmischung in der Füllung wird erfindungsgemäß so gewählt, dass die gewünschte Geschmacksintensität erreicht wird. Beispielsweise kann die Würzmischung in der Füllung in einer Menge von etwa 1-50 Gew.-%, vorzugsweise 15-40 Gew.-%, beispielsweise etwa 25 Gew.-% bezogen auf das Gesamtgewicht der Füllung eingesetzt werden.

Als Speisefett kann die Füllung pflanzliche und/oder tierische Fette oder Öle enthalten. Beispielsweise kann die Füllung Butter, Margarine, pflanzliches Fett, Joghurt, Käse und/oder Frischkäse umfassen. In einer bevorzugten Ausführungsform der Erfindung umfasst die Füllung Butter. Der Begriff "Butter" ist erfindungsgemäß so zu verstehen, dass er sowohl natürliche Butter als auch Butterfraktionen umfasst. Vorzugsweise umfasst die erfindungsgemäße Füllung Butter in Kombination mit einer Würzmischung und gegebenenfalls weiteren Bestandteilen.

Je nach Bedarf kann die Füllung weitere Zusätze enthalten. Beispiele für solche weiteren Zusätze sind Aromastoffe, vorzugsweise natürliche Aromastoffe, Säuerungsmittel, wie z.B. Citronensäure etc.

Weiter ist es möglich, dass die Füllung Konservierungsstoffe enthält. Wenn Konservierungsstoffe enthalten sind, so handelt es sich bevorzugt um

Sorbinsäure, Natriumsorbat, Kaliumsorbat und/oder Calciumsorbat. Es können prinzipiell aber auch beliebige andere Konservierungsstoffe, die im Fachbereich üblich sind, enthalten sein. In einer besonders bevorzugten Ausführungsform der Erfindung enthält die Füllung der Backware keine Konservierungsstoffe.

In einer besonders bevorzugten Ausführungsform wird die erfindungsgemäße Backware in länglicher Form bereitgestellt, insbesondere in Baguette-Form. Durch die Einkerbungen wird die längliche Backware (Baguette) in mehrere Segmente unterteilt. Vorzugsweise ist im Inneren der einzelnen Segmente eine Füllung enthalten.

In einer anderen bevorzugten Ausführungsform wird die erfindungsgemäße Backware in einer besonders flachen Form bereitgestellt, so dass sie sich für das Fertigbacken oder Erhitzen im Toaster eignet. Die flache, für den Toaster geeignete Backware wird durch die Einkerbungen ebenfalls in einzelne Segmente unterteilt, so dass ein Verbraucher die fertige Backware entlang dieser Einkerbungen in einzelne Abschnitte, beispielsweise in schmale Streifen zerteilen kann. Die flache, für den Toaster geeignete Backware kann ebenfalls im Inneren der einzelnen Segmente eine Füllung aufweisen. In einer besonders bevorzugten Ausführungsform ist die Backware jedoch ungefüllt. Sie kann stattdessen mit einem separaten Dip bereitgestellt werden, wie beispielsweise Kräuterquark oder Ähnlichem, so dass der Verbraucher durch Eintunken der einzelnen Streifen der Backware in den Dip einen leckeren einfach herzustellenden Snack erhält.

In einer weiteren bevorzugten Ausführungsform wird die erfindungsgemäße Backware in Form eines Laugengebäcks bereitgestellt. Hierzu wird für die Herstellung der Backware der Teigling vor dem Backen mit einer Lauge behandelt, beispielsweise durch Eintauchen oder Bestreichen des Teiglings.

Bei der Lauge handelt es sich vorzugsweise um eine Natronlauge, die vorzugsweise eine Laugenkonzentration von nicht mehr als 4% aufweist. Beim anschließenden Backen entsteht durch die Vorbehandlung mit der Lauge eine typische braunglänzende Oberfläche und das Gebäck erhält einen speziellen kräftigen Geschmack. Die Lauge bleibt nur auf der Teigoberfläche und dringt nicht in den Teigling ein. Der mit Lauge behandelte Teigling wird vorzugsweise vor dem Backen an der Oberfläche eingeritzt, um ein kontrolliertes Aufbrechen der Teigkruste während des Backvorgangs zu gewährleisten.

Die vorangehend definierte technische Aufgabe wird gelöst durch eine Schneide/Prägevorrichtung, insbesondere zum Herstellen von erfindungsgemäßen Backwaren, umfassend wenigstens eine Schneide/Präge-Gruppe mit wenigstens einem Schneidorgan und wenigstens einem Prägeorgan, wobei das wenigstens eine Schneidorgan und das wenigstens eine Prägeorgan in einer Teigstrangförderrichtung aufeinander folgend angeordnet sind und zum Schneiden/Prägen in einer Arbeitsrichtung bezüglich eines in Teigstrangförderrichtung geförderten Teigstrangs bewegbar sind.

Dadurch, dass die Schneide/Prägevorrichtung sowohl mit wenigstens einem Schneidorgan als auch mit wenigstens einem Prägeorgan bereitgestellt ist, kann mit einer einzigen Vorrichtung sowohl ein Teigling aus einem Teigstrang abgetrennt als auch wenigstens eine Einkerbung in den Teigling eingebracht werden.

Es kann vorgesehen sein, dass wenigstens eine Schneide/Präge-Gruppe ein Schneidorgan und eine Mehrzahl von Prägeorganen umfasst, wobei das eine Schneidorgan in der Teigstrangförderrichtung stromaufwärts oder stromabwärts bezüglich der Mehrzahl von Prägeorganen angeordnet ist.

Grundsätzlich ist es ausreichend, wenn lediglich ein Schneidorgan in Zuordnung zu einem Teigstrang bereitgestellt ist. Dabei ist es unerheblich, ob das Schneidorgan in der Teigstrangförderrichtung stromaufwärts oder stromabwärts bezüglich der Mehrzahl von Prägeorganen angeordnet ist. Das heißt, dass grundsätzlich die Einkerbungen in einen noch nicht von einem Teigstrang abgetrennten Teigling oder in einen bereits von einem Teigstrang abgetrennten Teigling eingebracht werden können.

Ferner kann vorgesehen sein, dass wenigstens ein Schneidorgan und wenigstens ein Prägeorgan wenigstens einer Schneide/Präge-Gruppe an einem gemeinsamen Halteelement getragen sind.

Mit einer derartigen Anordnung kann sich insbesondere das Einbringen von Einkerbungen in einen Teigling bei einer durch das Halteelement festgelegten Positionierung des wenigstens einen Prägeorgans relativ zu dem wenigstens einen Schneidorgan vereinfachen.

Hierbei kann ferner vorgesehen sein, dass das Halteelement auf den Teigstrang zu und von dem Teigstrang weg bewegbar ist.

Eine derartige Anordnung ist insbesondere zum Abtrennen von Teiglingen aus einem auf einem Förderband geförderten Teigstrang geeignet, da hierzu nicht das Förderband als Ganzes auf die Schneide/Prägevorrichtung zu bzw. von der Schneide/Prägevorrichtung weg bewegt werden muss. Aufgrund des gemeinsamen Halteelements kann darüber hinaus das Abtrennen eines Teiglings und das Einbringen von Einkerbungen in einem einzigen Arbeitsschritt erfolgen.

Es kann ferner vorgesehen sein, dass wenigstens ein Schneidorgan eine quer zur Teigstangförderrichtung verlaufende Schneidkante umfasst oder/und wenigstens ein Prägeorgan eine quer zur Teigstrangförderrichtung verlaufende Prägekante umfasst.

Mit einer quer zur Teigstrangförderrichtung verlaufenden Schneidkante kann ein Teigling bei entsprechender Dimensionierung der Schneidkante relativ zur Breitenabmessung eines zu bearbeitenden Teigstrangs abgetrennt werden, ohne dass das Schneidorgan zusätzlich quer zur Teigstrangförderrichtung bewegt werden muss. Entsprechend können Einkerbungen mit quer zur Teigstrangförderrichtung verlaufenden Prägekanten in vereinfachter Weise eingebracht werden. "Quer" muss hierbei allerdings nicht notwendigerweise orthogonal zur Teigstrangförderrichtung bedeuten. Durch geringe Abweichungen von der Orthogonalität lassen sich im Allgemeinen die vorangehend genannten Vorteile auch erzielen.

Dabei kann vorgesehen sein, dass die Prägekante wenigstens eines Prägeorgans bezüglich der Schneidkante wenigstens eines Schneidorgans in Arbeitsrichtung zurückversetzt ist. Mit einem derartigen Rückversatz der Prägekante bezüglich der Schneidkante kann sichergestellt werden, dass der Teigstrang im Bereich einer Einkerbung nicht vollständig durchtrennt wird. Ferner kann hierdurch auch sichergestellt werden, dass das Abtrennen eines Teiglings und das Einbringen von Einkerbungen im gleichen Arbeitsschritt erfolgen können.

Der Aufbau kann ferner derart sein, dass ein in Arbeitsrichtung bezüglich des Teigstrangs und bezüglich der wenigstens einen Schneide/Präge-Gruppe verlagerbares Anpresselement vorgesehen ist.

Mit einem derartigen Anpresselement kann insbesondere verhindert werden, dass beim Bewegen der Schneide/Prägevorrichtung in einer Gegen-Arbeitsrichtung, d.h. von dem Teigstrang weg, der Teigling bzw. der Teigstrang an einem Schneid- oder Prägeorgan haften bleibt.

Hierbei kann vorgesehen sein, dass das Anpresselement in Zuordnung zu wenigstens einem Schneidorgan oder/und in Zuordnung zu wenigstens einem Prägeorgan eine Durchtrittsöffnung aufweist.

Um effektiv verhindern zu können, dass Teig an einem Schneid- oder/und Prägeorgan bei Bewegen der Schneide/Präge-Gruppe in der Gegen-Arbeitsrichtung haften bleibt, ist es vorteilhaft, wenn der Teigstrang großflächig angepresst oder/und niedergehalten wird. Dies lässt sich beispielsweise dadurch erreichen, dass ein plattenartiges Anpresselement mit einer im Wesentlichen zur Arbeitsrichtung orthogonalen Erstreckungsebene an der Schneide/Prägevorrichtung vorgesehen ist und lediglich im Bereich des wenigstens einen Schneidorgans bzw. des wenigstens einen Prägeorgans Durchtrittsöffnungen aufweist, um deren Durchtritt zum angepressten Teigstrang hin zu ermöglichen.

Ferner kann vorgesehen sein, dass wenigstens ein Schneidorgan eine Anpressschulter aufweist. Mit einer derartigen Anpressschulter kann insbesondere sichergestellt werden, dass zwischen einem Teigstrang und einem kürzlich von dem Teigstrang abgetrennten Teigling ein ausreichend großer Spalt erzeugt wird, so dass ein nachträgliches Anhaften des Teiglings an den Teigstrang verhindert werden kann. Zusätzlich kann mit Hilfe der Anpressschulter die Form des Teiglings im Abtrennbereich derart beeinflusst werden, dass dieser einen abgeschrägten Endabschnitt aufweist.

Um sicherstellen zu können, dass der Teigstrang bzw. der Teigling durch die Bearbeitung durch die Schneide/Prägevorrichtung nicht in unnötiger Weise verformt wird, beispielsweise durch Anhaften von Teig an einem Schneid- oder Prägeorgan, kann vorgesehen sein, dass wenigstens ein Schneidorgan oder/und wenigstens ein Prägeorgan an seiner Oberfläche mit haftungsminderndem Material bereitgestellt ist. Hierbei kann grundsätzlich daran gedacht werden, ein Prägeorgan oder/und ein Schneidorgan vollständig aus haftungsminderndem Material wie beispielsweise Teflon herzustellen. Alternativ kann auch eine haftungsmindernde Beschichtung vorgesehen sein, welche unter Umständen lediglich im Bereich der Schneid- oder/und Prägekanten vorgesehen sein kann.

Der Aufbau kann derart sein, dass bei wenigstens einer Schneide/Präge-Gruppe eine Fördereinrichtung zum Fördern des durch diese zu schneidenden/prägenden Teigstrangs in der Teigstrangförderrichtung vorgesehen ist.

Das Vorsehen einer beispielsweise als Förderband ausgebildeten Fördereinrichtung ermöglicht eine besonders effiziente Bearbeitung eines Teigstrangs zu mit Einkerbungen versehenen Teiglingen, da der zu bearbeitende Abschnitt des Teigstrangs mit Hilfe der Fördereinrichtung relativ zu der Schneide/Prägevorrichtung in einfacher Weise positionierbar ist.

Um die Herstellung von mit Einkerbungen versehenen Teiglingen besonders effizient gestalten zu können, kann vorgesehen sein, dass mehrere Schneide/Präge-Gruppen quer zur Teigstangförderrichtung nebeneinander angeordnet sind. Hierbei kann auch daran gedacht werden, die Schneide/Präge-Gruppen an ein gemeinsames Halteelement anzubringen, wodurch die simultane Bearbeitung mehrerer Teigstränge ermöglicht werden kann.

Die Vorrichtung wird nachfolgend durch Bezugnahme auf die beiliegenden Figuren näher erläutert werden. Es zeigt:
- Fig. 1: eine Schneide/Prägevorrichtung in Zuordnung zu einem von einer Fördereinrichtung geförderten Teigstrang;
- Fig. 2: eine Schnittansicht der in Fig. 1 gezeigten Schneide/Prägevorrichtung beim Bearbeiten eines Teigstrangs; und
- Fig. 3: eine Draufsicht auf einen in einer Teigstrangförderrichtung geförderten Teigstrang, welche die relative Anordnung des Schneidorgans und der Prägeorgane relativ zur Teigstrangförderrichtung zeigt.

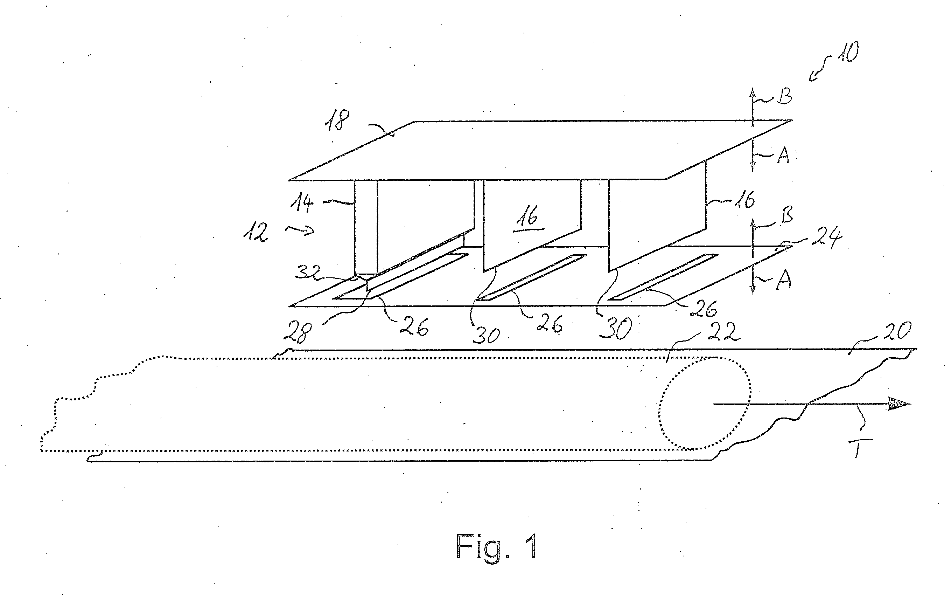

In Fig. 1 ist eine allgemein mit 10 bezeichnete Schneide/Prägevorrichtung dargestellt. Diese umfasst eine Schneide/Präge-Gruppe 12 mit einem Schneidorgan 14 sowie zwei Prägeorganen 16. Auch wenn in dem vorliegenden Ausführungsbeispiel lediglich zwei Prägeorgane 16 vorgesehen sind, ist deren Anzahl nicht auf zwei beschränkt, sondern kann im Prinzip beliebig sein. Ebenso kann mehr als ein Schneidorgan vorgesehen sein.

Sowohl das Schneidorgan 14 als auch die Prägeorogane 16 sind an einem gemeinsamen Halteelement 18 getragen. Die Schneide/Präge-Gruppe 12 ist in der vorliegenden Ausführungsform zusammen mit dem Halteelement 18 in einer Arbeitsrichtung A auf einen durch eine Fördereinrichtung 20 in einer Teigstrangförderrichtung T geförderten Teigstrang 22 zu und in einer Gegen-Arbeitsrichtung B von dem Teigstrang 22 weg bewegbar.

In Zuordnung zu der Schneide/Präge-Gruppe 12 ist ferner in dem vorliegenden Ausführungsbeispiel ein Anpresselement 24 vorgesehen, welches sowohl in Arbeitsrichtung A als auch in Gegen-Arbeitsrichtung B bewegbar und überdies relativ zu der Schneide/Präge-Gruppe 12 in Arbeitsrichtung A bzw. Gegen-Arbeitsrichtung B verlagerbar ist. In der in Fig. 1 gezeigten Darstellung befindet sich das Anpresselement 24 in einer vom Teigstrang 22 beabstandeten Position unterhalb der Schneide/Präge-Gruppe 12. Das Anpresselement 24 weist ferner in Zuordnung zu sowohl dem Schneidorgan 14 als auch den Prägeorganen 16 Durchtrittsöffnungen 26 auf.

Zum Abtrennen eines Teiglings aus dem Teigstrang 22 und zum Einbringen von Einkerbungen wird die Schneide/Präge-Gruppe 12 zusammen mit dem Halteelement 18 und dem Anpresselement 24 in Arbeitsrichtung A verlagert, z.B. bis das Anpresselement 24 mit dem Teigstrang 22 in Kontakt tritt. Mit Hilfe des Anpresselements 24 wird verhindert, dass Teig beim Bewegen der Schneide/Präge-Gruppe 12 vom Teigstrang 22 weg an einem Schneideorgan 14 oder/und Prägeorgan 16 haften bleibt. Da das Anpresselement 24 relativ zur Schneide/Präge-Gruppe 12 und zum Halteelement 18 verlagerbar ist, führt ein weiteres Verlagern der Schneide/Präge-Gruppe 12 und des Halteelements 24 in Arbeitsrichtung A dazu, dass das Schneidorgan 14 und die Prägeorgane 16 durch die dazu in dem Anpresselement 24 vorgesehenen Durchtrittsöffnungen 26 hindurchtreten, um zum zu bearbeitenden Teigstrang 22 zu gelangen. Dabei wird der Teigstrang 22 durch das Schneidorgan 14 durchtrennt und es werden Einkerbungen in den abgetrennten Abschnitt des Teigstrangs 22 durch die Prägeorogane 16 eingebracht.

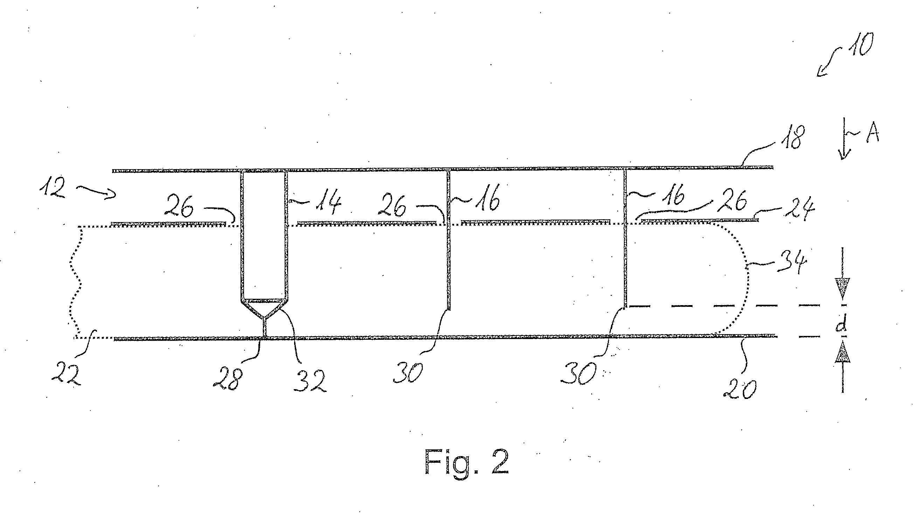

In Fig. 2 ist die Schneide/Präge-Gruppe 12 in einer Stellung gezeigt, welche dem Endpunkt der Bewegung in Arbeitsrichtung A entspricht. Diese Stellung ist dadurch gekennzeichnet, dass eine Schneidkante 28 des Schneidorgans 14 im Wesentlichen mit der Fördereinrichtung 20 in Kontakt steht, so dass dabei der Teigstrang 22 an dieser Position gerade durchtrennt worden ist. Wie weiter aus Fig. 2 zu erkennen ist, sind Prägekanten 30 der Prägeorgane 16 in Arbeitsrichtung A um einen Abstand d zurückversetzt. Dieser Abstand beträgt nicht mehr als 5 mm, vorzugsweise nicht mehr als 3 mm und weiter bevorzugt nicht mehr als 2 mm. Durch diesen Rückversatz werden im Bereich der Prägekanten 30 im Teigstrang 22 lediglich Einkerbungen erzeugt, ohne den Teigstrang 22 vollständig zu durchtrennen. Aufgrund dieser Einkerbungen lässt sich die daraus gefertigte Backware später besonders leicht in einzelne Segmente trennen.

Wie weiter aus Fig. 2 zu erkennen ist, weist das Schneidorgan 14 eine Anpressschulter 32 auf. Durch diese Anpressschulter 32 wird zwischen dem Teigstrang 22 und einem kürzlich abgetrennten Teigling 34 ein ausreichend großer Spalt erzeugt, so dass nach Entfernen des Schneidorgans 14 der abgetrennte Teigling 34 nicht mehr mit dem Teigstrang 22 in Kontakt treten und an diesem haften kann. Zusätzlich kann mit Hilfe der Anpressschulter 32 die Form des Teiglings 34 im Abtrennbereich derart beeinflusst werden, dass dieser einen abgeschrägten Endabschnitt aufweist.

Um ein Anhaften des Schneidorgans 14 oder/und der Prägeorgane 16 oder/und des Anpresselements 24 an dem Teigstrang 22 oder/und dem Teigling 34 verhindern zu können, ist es vorteilhaft, wenn diese mit einem haftungsmindernden Material gebildet sind. Beispielsweise kann hierbei an eine Teflonbeschichtung gedacht werden.

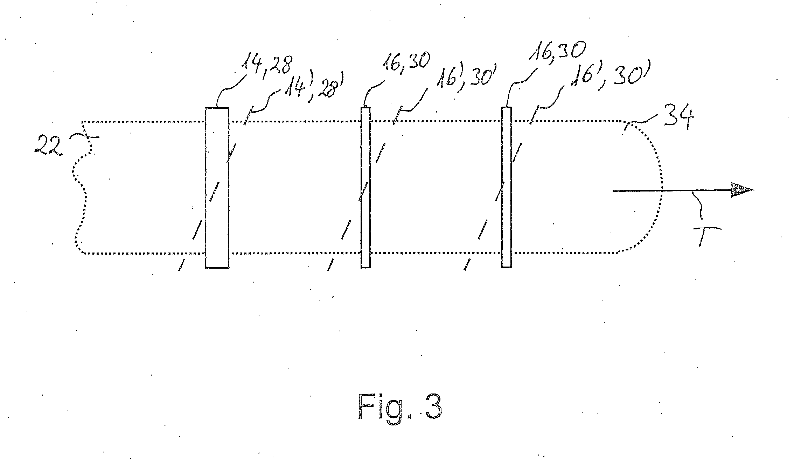

In der vorliegenden Ausführungsform sind, wie in Fig. 3 gezeigt, die Schneidkante 28 des Schneidorgans 14 sowie die Prägekanten 30 der Prägeorgane 16 im Wesentlichen orthogonal zur Teigstrangförderrichtung T angeordnet. Grundsätzlich ist es aber im Rahmen der Erfindung auch möglich, von der Orthogonalität abzuweichen. Durch die gestrichelten Linien in Fig. 3 sind eine Schneidkante 14' eines nicht orthogonal zur Teigstrangförderrichtung T orientierten Schneidorgans 28' sowie die Prägekanten 30' nicht orthogonal zur Teigstrangförderrichtung T orientierter Prägeorgane 16' dargestellt. Auch mit derartigen, nicht orthogonal zur Teigstrangförderrichtung T angeordneten Schneid- und Prägekanten 28', 30' lässt sich der Teigstrang 22, wie aus Fig. 3 erkennbar, in der gleichen Weise wie mit orthogonal angeordneten Schneid- und Prägekanten bearbeiten.

Auch wenn in der vorliegenden Ausführungsform lediglich eine Schneide/Präge-Gruppe 12 gezeigt ist, können im Rahmen der Erfindung mehrere Schneide/Präge-Gruppen quer zur Teigstangförderrichtung T nebeneinander angeordnet sein. Hierbei kann auch daran gedacht werden, die Schneide/Präge-Gruppen an ein gemeinsames Halteelement anzubringen, wodurch die simultane Bearbeitung mehrerer Teigstränge ermöglicht werden kann.

## Patentansprüche

1. Backware, welche teilweise gebackenes Brot umfasst, **dadurch gekennzeichnet, dass** die Backware an zwei oder mehreren Positionen ihrer Längsrichtung Einkerbungen über ihre gesamte Breite aufweist, welche die Backware in Segmente unterteilen, wobei sich die von außen erkennbaren Einkerbungen im Inneren der Backware als Unterbrechung der Teigstruktur fortsetzen, die nicht bis zur Unterseite der Backware reicht, und wobei die einzelnen Segmente der teilweise gebackenen Backware im Bereich einer gedachten Verlängerung der Einkerbungen im Inneren der Backware durch eine Bestreuung getrennt und im Wesentlichen nicht mit einander verbacken sind, und die Backware erhältlich ist durch ein Verfahren nach einem der Ansprüche 2 bis 6.

2. Verfahren zur Herstellung einer Backware welche teilweise gebackenes Brot umfasst, umfassend die Schritte
(i) Bereitstellen eines Teiglings,
(ii) Aufbringen einer Bestreuung auf der Oberseite des Teiglings,
(iii) Ausbilden von Einkerbungen über die gesamte Breite des Teiglings an zwei oder mehreren Positionen seiner Längsrichtung, um den Teigling in mehrere Segmente zu unterteilen, wobei die Einkerbungen durch Eindrücken des Teiglings ausgebildet werden, und
(iv) teilweises Backen des Teiglings,
wobei der Teigling optional nach Schritt (i) oder (ii) oder während Schritt (iii) zu einem Teigling mit einer vorbestimmten Form portioniert wird, wobei die Tiefe der Einkerbungen zumindest 80%, vorzugsweise zumindest 90%, vorzugsweise zumindest 95%, weiter bevorzugt zumindest 98% der Dicke des Teiglings beträgt,
und die Einkerbungen in Schritt (iii) durch Eindrücken des Teiglings bis auf eine Restdicke von nicht mehr als 5 mm, vorzugsweise nicht mehr als 3 mm, weiter bevorzugt nicht mehr als 2 mm ausgebildet werden können.

3. Verfahren nach Anspruch 2, wobei die Bestreuung Mehl, Mehlerzeugnisse, Körner, Kerne, Kartoffeln, Nüsse, Kräuter, Gewürze, Röstzwiebeln, Zubereitungen und/oder Mischungen davon umfasst, wobei die Bestreuung bevorzugt Partikel mit einer Teilchengröße von mindestens 0,3 mm, vorzugsweise mindestens 0,5 mm, weiter bevorzugt mindestens 0,8 mm umfasst.

4. Verfahren nach einem der Ansprüche 2 oder 3, weiterhin umfassend (v) Einbringen einer Füllung, welche vorzugsweise mittig in die einzelnen Segmente der Backware eingespritzt wird, wobei die Füllung vorzugsweise ein Speisefett, ggf. in Kombination mit einer Würzmischung umfasst, wobei die Füllung insbesondere Butter, Margarine, pflanzliches Fett, Joghurt, Käse und/oder Frischkäse umfassen kann.

5. Verfahren nach Anspruch4, wobei die Füllung Kräuter, Gewürze, Salz, Zucker, Gemüse, Pilze, Obst, Früchte, Trockenfrüchte, Hülsenfrüchte, Nüsse, Körner, Kerne, Fleisch, Fisch, Meeresfrüchte und/oder Aromen umfasst.

6. Verfahren nach einem der Ansprüche 2 bis 5, wobei in Schritt (iii) die Einkerbungen in dem Teigling mittels einer Schneide/Prägevorrichtung ausgebildet werden und der Teigling gleichzeitig zu einem Teigling mit einer vorbestimmten Form portioniert wird, der durch die Einkerbungen in mehrere Segmente unterteilt ist,
vorzugsweise wobei der Teigling in Schritt (i) in Form eines Teigstrangs bereitgestellt wird und in Schritt (iii) von dem Teigstrang ein vorzugsweise länglicher Teigling abgeschnitten wird.

## Claims

1. Bakery product, comprising partially baked bread, **characterised in that** the bakery product has indentations over the entire width thereof at two or more positions in the longitudinal direction thereof, which indentations divide the bakery product into segments, the indentations, which are visible from the outside, continuing inside the bakery product as a break in the dough structure which does not reach the bottom of the bakery product, and the individual segments of the partially baked bakery product being separated by sprinkling in the region of an imaginary extension of the indentations within the bakery product and generally not being baked together, and the bakery product being obtainable by a method according to any of claims 2 to 6.

2. Method for producing a bakery product comprising partially baked bread, said method comprising the following steps:
(i) providing a dough piece,
(ii) sprinkling the top of the dough piece,
(iii) forming indentations over the entire width of the dough piece at two or more positions in the longitudinal direction thereof in order to divide the dough piece into a plurality of segments, wherein the indentations are formed by pressing into the dough piece, and
(iv) partially baking the dough piece,
wherein, optionally following step (i) or (ii) or during step (iii), the dough piece is portioned so as to form a dough piece having a predefined shape, wherein the depth of the indentations is at least 80%, preferably at least 90%, preferably at least 95%, more preferably at least 98% of the thickness of the dough piece,
and, in step (iii), the indentations can be formed by pressing into the dough piece until there is a remaining thickness of no more than 5 mm, preferably no more than 3 mm, more preferably no more than 2 mm.

3. Method according to claim 2, wherein the sprinkling comprises flour, flour products, grains, seeds, potatoes, nuts, herbs, spices, roasted onions, preparations and/or mixtures thereof, wherein the sprinkling preferably comprises particles having a particle size of at least 0.3 mm, preferably at least 0.5 mm, more preferably at least 0.8 mm.

4. Method according to either claim 2 or claim 3, further comprising (v) inserting a filling which is preferably injected into the centre of the individual segments of the bakery product, wherein the filling preferably comprises a cooking fat, optionally in combination with a seasoning mix, wherein the filling can comprise in particular butter, margarine, vegetable fat, yoghurt, cheese and/or cream cheese.

5. Method according to claim 4, wherein the filling comprises herbs, spices, salt, sugar, vegetables, mushrooms, fruit, dried fruit, legumes, nuts, grains, seeds, meat, fish, seafood and/or flavourings.

6. Method according to any of claims 2 to 5, wherein, in step (iii), the indentations in the dough piece are formed by means of a cutting/embossing apparatus, and the dough piece is at the same time portioned so as to form a dough piece which has a predefined shape and is divided by the indentations into a plurality of segments, the dough piece preferably being provided in the form of a dough strand in step (i) and a preferably elongate dough piece being cut off from the dough strand in step (iii).

## Revendications

1. Produit de boulangerie qui comprend du pain partiellement cuit, **caractérisé en ce que** le produit de boulangerie présente sur toute sa largeur, au niveau de deux ou plusieurs positions de sa direction longitudinale, des entailles qui subdivisent le produit de boulangerie en segments, dans lequel les entailles identifiables de l'extérieur se poursuivent à l'intérieur du produit de boulangerie en tant qu'interruption de la structure de pâte, qui ne va pas jusqu'au côté inférieur du produit de boulangerie, et dans lequel les segments individuels du produit de boulangerie partiellement cuit sont séparés dans la zone d'un prolongement imaginaire des entailles à l'intérieur du produit de boulangerie par un saupoudrage et ne sont sensiblement pas cuits les uns avec les autres, et le produit de boulangerie peut être obtenu par un procédé selon l'une des revendications 2 à 6.

2. Procédé de fabrication d'un produit de boulangerie qui comprend du pain partiellement cuit, comprenant les étapes
(i) de fourniture d'un pâton,
(ii) d'application d'un saupoudrage sur le côté supérieur du pâton,
(iii) de formation d'entailles sur toute la largeur du pâton, au niveau de deux ou plusieurs positions de sa direction longitudinale, pour subdiviser le pâton en plusieurs segments, dans lequel les entailles sont formées par des impressions du pâton, et
(iv) de cuisson partielle du pâton,
dans lequel le pâton est divisé en portions éventuellement après l'étape (i) ou (ii) ou pendant l'étape (iii) en un pâton de forme prédéterminée, dans lequel la profondeur des entailles est d'au moins 80 %, de préférence d'au moins 90 %, de préférence d'au moins 95 %, de manière davantage préférée d'au moins 98 % de l'épaisseur du pâton,
et les entailles à l'étape (iii) peuvent être formées par des impressions du pâton jusqu'à une épaisseur résiduelle ne dépassant pas 5 mm, de préférence ne dépassant pas 3 mm, de manière davantage préférée ne dépassant pas 2 mm.

3. Procédé selon la revendication 2, dans lequel le saupoudrage comprend de la farine, des produits de meunerie, des grains, des graines, des pommes de terre, des noix, des herbes, des épices, des oignons frits, des préparations et/ou des mélanges de ceux-ci, dans lequel le saupoudrage comprend de préférence des particules présentant une taille de particules d'au moins 0,3 mm, de préférence d'au moins 0,5 mm, de manière davantage préférée d'au moins 0,8 mm.

4. Procédé selon l'une des revendications 2 ou 3, comprenant en outre (v) un apport d'un garnissage qui est injecté de préférence au centre des segments individuels du produit de boulangerie, dans lequel le garnissage comprend de préférence une graisse alimentaire, éventuellement en combinaison avec un mélange d'épices, dans lequel le garnissage peut comprendre en particulier du beurre, de la margarine, une graisse végétale, un yoghourt, du fromage et/ou du fromage frais.

5. Procédé selon la revendication 4, dans lequel le garnissage comprend des herbes, des épices, du sel, du sucre, des légumes, des champignons, des fruits de culture, des fruits, des fruits secs, des légumineuses, des noix, des grains, des graines, de la viande, du poisson, des fruits de mer et/ou des arômes.

6. Procédé selon l'une des revendications 2 à 5, dans lequel à l'étape (iii), les entailles sont formées dans le pâton au moyen d'une lame/d'un dispositif de gaufrage et le pâton est en même temps divisé en portions en un pâton de forme prédéterminée qui est subdivisé en plusieurs segments par les entailles,
de préférence dans lequel le pâton est fourni à l'étape (i) sous la forme d'un boudin de pâte et à l'étape (iii), un pâton de préférence longitudinal est coupé du boudin de pâte.
